# EUROPÄISCHE PATENTANMELDUNG

(11) **EP 1 510 689 A1**
(43) Veröffentlichungstag der Anmeldung: **02.03.2005**
(21) Anmeldenummer: 03102624.8
(22) Anmeldetag: 21.08.2003
(51) Int. Cl.: F02M 61/18, F02M 61/14, F02M 61/06, F02M 61/16, F02M 69/04

(54) **Kraftstoffeinspritzventil**

(71) Anmelder: Ford Global Technologies, LLC, A subsidary of Ford Motor Company, Dearborn, MI 48126 (US)
(72) Erfinder: Pingen, Bert, 53913, Swisttal (DE); Zimmermann, Diana, 51107, Koeln (DE)
(74) Vertreter: Drömer, Hans-Carsten, Dr.-Ing.

(57) **Zusammenfassung**

Die Erfindung betrifft ein Einspritzventil (20), bei welchem der Öffnungszustand mindestens einer Auslaßöffnung (21) verändert werden kann. Insbesondere können bei einem Einspritzventil (20) mit mehreren Auslaßöffnungen (21) diese durch externe Kontrolle geöffnet oder geschlossen werden. Damit läßt sich die Kraftstoffflußrate bei gleichbleibendem Einspritzdruck regeln, so daß insbesondere bei geringen Motorlasten kleine Kraftstoffmengen über eine im Wesentlichen gleichbleibende Einspritzdauer zugeführt werden können. Hierdurch wird das Motorverhalten bei geringen Motorlasten stabilisiert.

## Beschreibung

Die Erfindung betrifft ein Einspritzventil für eine Brennkraftmaschine mit mindestens einer Auslaßöffnung, ein Kraftstoff-Einspritzsystem mit einem derartigen Einspritzventil sowie ein Verfahren zur Steuerung der Kraftstoffeinspritzung in einer Brennkraftmaschine.

Einspritzventile werden bei Brennkraftmaschinen verwendet, um Kraftstoff für die Verbrennung in den Einlaßkanal oder direkt in den Zylinder der Brennkraftmaschine zu injizieren. Einspritzventile können dabei eine oder mehrere Auslaßöffnungen bzw. Auslaßdüsen haben, über welche der Kraftstoff austritt. Der Ausgestaltung dieser Auslaßöffnungen kommt eine hohe Bedeutung zu, da sie die Form und Richtung des entstehenden Kraftstoffstrahls bestimmen, was wiederum entscheidend für die resultierende Verbrennung ist. Diesbezüglich ist aus der DE 44 24 117 A1 ein Einspritzventil bekannt, welches insgesamt geschwenkt werden kann, um je nach Betriebsbedingungen des Motors die Ausrichtung bzw. Form des Kraftstoffstrahls anpassen zu können.

Die bekannten Kraftstoff-Einspritzsysteme führen häufig zu Problemen, wenn bei kleiner Motorlast nur geringe Brennstoffmengen pro Motortakt eingespritzt werden müssen. Eine Verringerung der Einspritzmenge wird dabei durch eine Reduzi e-rung des Einspritzdruckes und eine Verkürzung der Einspritzzeit erreicht. Der Einspritzdruck allein kann in der Regel nicht so klein gemacht werden, daß auf die Verkürzung der Einspritzdauer ganz verzichtet werden könnte. Die resultierenden kurzen Einspritzzeiten sind insbesondere bei strahlgeführten Brennverfahren problematisch, da das Einspritzende und der Entzündungszeitpunkt sehr nah beieinander liegen und der Strahl direkt entzündet werden muß. Dies führt zu der Schwierigkeit, die geringe Brennstoffmasse im exakt richtigen Zeitpunkt durch den Zündfunken zu erfassen. Bei geringen Motorlasten steht somit nur ein eingeschränkter Stabilitätsbereich zur Verfügung, und es treten verhältnismäßig früh und häufig Zündaussetzer auf.

Vor diesem Hintergrund war es eine Aufgabe der vorliegenden Erfindung, Mittel zum Einspritzen von Kraftstoff in einer Brennkraftmaschine bereitzustellen, die insbesondere bei geringen Motorlasten einen stabilen Betrieb ermöglichen.

Diese Aufgabe wird durch ein Einspritzventil mit den Merkmalen des Anspruchs 1, durch ein Kraftstoff-Einspritzsystem mit den Merkmalen des Anspruchs 6 sowie durch ein Verfahren mit den Merkmalen des Anspruchs 9 gelöst. Vorteilhafte Ausgestaltungen sind in den Unteransprüchen enthalten.

Das erfindungsgemäße Einspritzventil für eine Brennkraftmaschine weist mindestens eine Auslaßöffnung auf, über welche der Kraftstoff zum Beispiel in den Einlaßkanal oder vorzugsweise direkt in die Brennkammer injiziert werden kann. Die Auslaßöffnung ist dabei typischerweise als Düse ausgestaltet, welche eine bestimmte Form und Geschwindigkeitsverteilung des austretenden Kraftstoffstrahls erzeugt. Das Einspritzventil ist dadurch gekennzeichnet, daß der Öffnungszustand der mindestens einen Auslaßöffnung unter externer Kontrolle verändert werden kann. Der Öffnungszustand der Auslaßöffnung kann dabei in Stufen oder stufenlos zwischen einer maximalen und einer minimalen Öffnung variieren, wobei die minimale Öffnung insbesondere einem vollständigen Schließen entsprechen kann. Wenn das Einspritzventil mehrere Auslaßöffnungen aufweist, kann vorzugsweise der Öffnungszustand aller Austrittsöffnungen extern kontrolliert werden. Der Öffnungszustand kann beispielsweise durch den Durchflußwiderstand der Ausgangsöffnung quantifiziert werden.

Das beschriebene Einspritzventil gibt somit die Möglichkeit, auf die strömungmässigen Austrittsverhältnisse des Kraftstoffes Einfluß zu nehmen und diese gezielt zu verändern. Damit steht für die Regelung der Kraftstoffeinspritzung ein wichtiger Parameter neben der Einspritzdauer und dem Einspritzdruck zur Verfügung, mit welchem variierende Kraftstoffmengen pro Takt erzeugt werden können. Dies ermöglicht es zum Beispiel, die Einspritzdauer auch bei geringen Motorlasten und damit geringen Kraftstoffmengen pro Takt ausreichend groß zu halten, so daß ein stabiles Motorverhalten gewährleistet ist.

Vorzugsweise ist das Einspritzventil so ausgestaltet, daß die strömungswirksame Querschnittsfläche der mindestens einen Austrittsöffnung verändert werden kann. Die Querschnittsfläche einer Auslaßöffnung oder Auslaßdüse ist ein entscheidender Parameter, welcher den Durchflußwiderstand der Öffnung bestimmt. Daher kann durch eine Verkleinerung der strömungswirksamen Querschnittsfläche die bei einem bestimmten Einspritzdruck pro Zeiteinheit austretende Kraftstoffmenge (Kraftstofffiußrate) gezielt verringert werden. Eine Verkleinerung der strömungswirksamen Querschnittsfläche einer Austrittsöffnung ist dabei konstruktiv auf verschiedene Weisen verhältnismäßig einfach zu erreichen.

Gemäß einer Weiterbildung des Einspritzventils kann der Sprühwinkel der Austrittsöffnung verändert werden, das heißt der (räumliche) Winkel, der vom austretenden Kraftstoffstrahl abgedeckt wird. Vorzugsweise geht dabei die Änderung des Sprühwinkels mit der Veränderung des Öffnungszustandes der Austrittsöffnung einher, das heißt, daß bei kleinerem Sprühwinkel (und konstantem Einspritzdruck) auch eine kleinere Kraftstoffflußrate vorliegt. Über den Sprühwinkel wird die Kraftstoffverteilung im Gemisch und damit der Ablauf des Brennvorganges entscheidend beeinflußt.

Bei einer anderen Ausgestaltung des Einspritzventils kann die mindestens eine kontrolliert veränderbare Austrittsöffnung geöffnet und vollständig geschlossen werden. Insbesondere ist es möglich, daß sie dabei nur zwei Zustände, nämlich "offen" und "geschlossen" annehmen kann. Das vollständige Schließen einer Austrittsöffnung läßt sich technisch verhältnismäßig einfach und vor allem robust erreichen, so daß definierte Austrittsverhältnisse an dem Einspritzventil entstehen. Des Weiteren kann ein vollständiges Schließen einer Austrittsöffnung in einfacher Weise auch aus größerer Entfernung von der Öffnung bewirkt werden, indem zum Beispiel eine separate Zuleitung zur Austrittsöffnung versperrt wird. Es ist daher nicht unbedingt erforderlich, eine Schließmechanik im beengten Raum an der Spitze des Einspritzventils vorzusehen.

Weiterhin kann das Einspritzventil optional mehrere ungefähr auf einem Bogen, z.B. einem Kreisbogen, verteilt angeordnete Austrittsöffnungen enthalten und dazu eingerichtet sein, daß schrittweise Austrittsöffnungen geöffnet werden können, die über einen zusammenhängenden Winkelbereich hinweg nebeneinander liegen. Das heißt, daß die jeweils offenen Austrittsöffnungen alle auf einem Abschnitt des Bogens, welcher dem genannten Winkelbereich entspricht, nebeneinander liegen, und daß ausgehend hiervon die Öffnungszustände der Austrittsöffnungen an den beiden Enden dieses Winkelbereiches kontrolliert werden. Der durch alle Austrittsöffnungen gemeinsam erzeugte Kraftstoffstrahl deckt somit immer im Wesentlichen den genannten Winkelbereich ab.

Die Erfindung betrifft ferner ein Kraftstoff-Einspritzsystem für eine Brennkraftmaschine, welches mindestens ein Einspritzventil der oben erläuterten Art (das heißt mit extern kontrollierbarem Öffnungszustand mindestens einer Austrittsöffnung) enthält, und welches weiterhin eine mit dem Einspritzventil verbundene Steuereinheit zur Kontrolle des Öffnungszustandes der mindestens einen veränderbaren Austrittsöffnung des Einspritzventils aufweist. Wie in Verbindung mit dem Einspritzventil erläutert wurde, kann ein derartiges Kraftstoff-Einspritzsystem den Öffnungszustand als einen Regelungsparameter neben dem Einspritzdruck und der Einspritzdauer einsetzen, um das Einspritzen und damit den Brennvorgang vorteilhaft zu kontrollieren.

Vorzugsweise ist die Steuereinheit dabei dazu eingerichtet, bei geringen Kraftstoffeinspritzmengen pro Motortakt den Öffnungszustand der mindestens einen kontrollierbaren Austrittsöffnung des Einspritzventils in Richtung einer Begrenzung der Kraftstofffiußrate einzustellen.

Insbesondere kann die Steuereinheit dazu eingerichtet sein, eine Variation der pro Motortakt eingespritzten Kraftstoffmenge im Wesentlichen ohne eine Veränderung der Einspritzdauer und/oder des Einspritzdruckes allein durch Einstellung des Öffnungszustandes der kontrollierbaren Austrittsöffnung zu bewirken. Gerade die Möglichkeit, die Einspritzdauer im Wesentlichen konstant zu halten, bringt wesentliche Vorteile bei der Regelung von strahlgeführten Brennkraftmaschinen mit Direkteinspritzung, indem dort auch bei geringen Motorlasten stabile Verbrennungsverhältnisse gewährleistet werden können.

Die Erfindung betrifft ferner ein Verfahren zur Steuerung der Kraftstoffeinspritzung in einer Brennkraftmaschine, welches dadurch gekennzeichnet ist, daß der Öffnungszustand mindestens einer Auslaßöffnung eines Einspritzventils verändert wird. Das Verfahren beinhaltet somit in allgemeiner Form die mit einem Einspritzventil bzw. einem Kraftstoff-Einspritzsystem der oben erläuterten Art ausführbaren Schritte. Für eine weitere Erläuterung der Eigenschaften, Vorteile und Weiterbildungen des Verfahrens wird daher auf die obige Beschreibung verwiesen.

Das Verfahren kann insbesondere so ausgeführt werden, daß eine Veränderung der pro Motortakt eingespritzten Kraftstoffmenge bei im Wesentlichen gleicher Einspritzdauer und vorzugsweise bei gleichem Einspritzdruck allein durch Veränderung des Öffnungszustandes der kontrollierbaren Auslaßöffnung des Einspritzventils erreicht wird.

Im Folgenden wird die Erfindung anhand der Figuren beispielhaft näher erläutert.
Es zeigen:
Fig. 1 eine schematische Aufsicht auf ein erfindungsgemäßes Einspritzventil mit einer veränderlichen Auslaßöffnung, und
Fig. 2 eine schematische Aufsicht auf ein erfindungsgemäßes Einspritzventil mit mehreren kontrolliert verschließbaren Austrittsöffnungen.

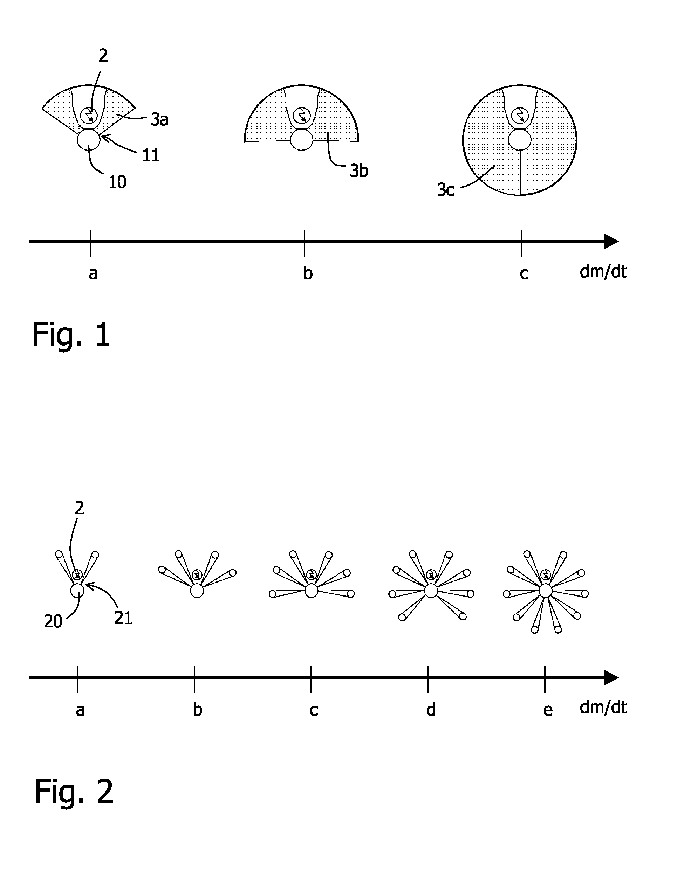

In Figur 1 ist eine erste Ausführungsform eines erfindungsgemäßen Einspritzventils 10 schematisch in einer Ansicht von unten für drei verschiedene Betriebszustände a, b, c dargestellt. Das Einspritzventil 10 ist dabei zum Beispiel an der Oberseite eines Zylinders neben einer Zündkerze 2 angeordnet. Die Zündkerze 2 ist in den Kraftstoffstrahlen von den Einspritzventilen immer ausgespart, damit sie nicht direkt mit Kraftstoff benetzt wird. Das Einspritzventil 10 weist ferner eine Auslaßöffnung 11 auf, deren Öffnungsquerschnitt bzw. Breite durch einen nicht näher dargestellten Mechanismus von der Motorsteuerung kontrolliert bzw. verändert werden kann. Der Mechanismus könnte zum Beispiel durch eine blendenartige Vorrichtung oder durch eine Verschlußmaske realisiert werden, die in variierendem Grad über den Schlitz der Auslaßöffnung geschoben werden kann.

Im links in Figur 1 dargestellten Betriebszustand a ist die Austrittsöffnung 11 bis auf ein Minimum geschlossen, so daß ein über einen kleinen Winkelbereich von ca. 90° austretender Kraftstoffstrahl 3a (unter Aussparung der Zündkerze 2) entsteht.

Im mittleren Zustand b ist die Auslaßöffnung so weit geöffnet, daß der Kraftstoffstrahl 3b sich über einen Winkelbereich von etwa 180° erstreckt. Im rechts dargestellten maximalen Öffnungszustand c der Auslaßöffnung erstreckt sich der Kraftstoffstrahl 3c über volle 360° (jeweils mit der genannten Aussparung der Zündkerze 2).

Die bei gleichem Einspritzdruck aus dem Einspritzventil 10 austretende Kraftstoffflußrate dm/dt nimmt entsprechend dem Pfeil in Figur 1 von links nach rechts zu. Durch die Kontrolle des Öffnungszustandes der Auslaßöffnung 11 kann daher Ei n-fluß auf die Kraftstofffiußrate genommen werden, was es wiederum ermöglicht, bei geringen Motorlasten kleine Kraftstoffmengen pro Motortakt ohne die Notwendigkeit einer Veränderung der Einspritzdauer zuzuführen. Hierdurch kann die Gemischaufbereitung weitgehend konstant gehalten werden, was wiederum zu einem stabilen Verbrennungsverhalten des Motors auch bei kleinen Motorlasten führt.

Figur 2 zeigt eine andere Ausführungsform eines Einspritzventils 20, bei dem mehrere (insgesamt zehn) Auslaßöffnungen 21 vorhanden sind. Das Einspritzventil 20 ist wieder benachbart zu einer Zündkerze 2 in einem Zylinder angeordnet, wobei keine Auslaßöffnung des Einspritzventils 20 direkt auf die Zündkerze 2 gerichtet ist.

Bei dem in Figur 2 links dargestellten Zustand a sind alle Auslaßöffnungen bis auf diejenigen zwei, die ihren Strahl unmittelbar benachbart links und rechts an der Zündkerze 2 vorbei lenken, geschlossen. In den daneben dargestellten Zuständen b, c, d und e werden jeweils die beiden Auslaßöffnungen vom geschlossenen in den offenen Zustand überführt, welche an eine bereits offene Auslaßöffnung angrenzen. Somit sind im Zustand b vier, im Zustand c sechs, im Zustand d acht und im Zustand e alle zehn Auslaßöffnungen aktiv. Der aus den einzelnen Kraftstoffstrahlen insgesamt entstehende Kraftstoffnebel erstreckt sich entsprechend über einen zunehmend großen Winkelbereich bis hin zu vollen 360° im Zustand e.

Mit zunehmender Anzahl geöffneter Auslaßöffnungen 21 nimmt entsprechend auch die Kraftstofffiußrate dm/dt bei gleichbleibendem Einspritzdruck zu. Das dargestellte Mehrloch-Einspritzventil 20 erlaubt daher ebenfalls eine Steuerung der Kraftstoffeinspritzmenge im Wesentlichen ohne Variation der Einspritzdauer.

## Patentansprüche

1. Einspritzventil (10, 20) für eine Brennkraftmaschine, enthaltend mindestens eine Auslaßöffnung (11, 21),
**dadurch gekennzeichnet, daß**
der Öffnungszustand der Auslaßöffnung (11, 21) verändert werden kann.

2. Einspritzventil nach Anspruch 1,
**dadurch gekennzeichnet, daß**
die strömungswirksame Querschnittsfläche der Austrittsöffnung (11) verändert werden kann.

3. Einspritzventil nach Anspruch 1 oder 2,
**dadurch gekennzeichnet, daß**
der Sprühwinkel der Austrittsöffnung (11) verändert werden kann.

4. Einspritzventil nach mindestens einem der Ansprüche 1 bis 3,
**dadurch gekennzeichnet, daß**
die Austrittsöffnung (21) geöffnet und geschlossen werden kann.

5. Einspritzventil nach mindestens einem der Ansprüche 1 bis 4,
**dadurch gekennzeichnet, daß**
dieses mehrere auf einem Bogen verteilt angeordnete Austrittsöffnungen (21) enthält, und daß schrittweise Austrittsöffnungen (21), die über einen zusammenhängenden Winkelbereich hinweg nebeneinander liegen, geöffnet werden können.

6. Kraftstoff-Einspritzsystem für eine Brennkraftmaschine, enthaltend ein Einspritzventil (10, 20) nach mindestens einem der Ansprüche 1 bis 5 sowie eine damit verbundene Steuereinheit zur Kontrolle des Öffnungszustandes der mindestens einen veränderbaren Auslaßöffnung (11, 21) des Einspritzventils.

7. Kraftstoff-Einspritzsystem nach Anspruch 6,
**dadurch gekennzeichnet, daß**
die Steuereinheit dahingehend ausgebildet ist, bei geringen Kraftstoffeinspritzmengen pro Motortakt den Öffnungszustand in Richtung einer Begrenzung der Kraftstoffflußrate einzustellen.

8. Kraftstoff-Einspritzsystem nach Anspruch 6 oder 7,
**dadurch gekennzeichnet, daß**
die Steuereinheit dahingehend ausgebildet ist, eine Variation der pro Motortakt eingespritzten Kraftstoffmenge im Wesentlichen ohne Veränderung der Einspritzdauer und/oder des Einspritzdruckes allein durch Einstellung des Öffnungszustandes zu bewirken.

9. Verfahren zur Steuerung der Kraftstoffeinspritzung in einer Brennkraftmaschine,
**dadurch gekennzeichnet, daß**
der Öffnungszustand mindestens einer Auslaßöffnung (11, 21) eines Einspritzventils (10, 20) verändert wird.

10. Verfahren nach Anspruch 9,
**dadurch gekennzeichnet, daß**
zur Anpassung der pro Motortakt eingespritzten Kraftstoffmenge der Öffnungszustand der mindestens einen Auslaßöffnung eines Einspritzventils bei im Wesentlichen gleichbleibender Einspritzdauer und vorzugsweise bei gleichbleibendem Einspritzdruck verändert wird.
